# EUROPEAN PATENT APPLICATION

(11) **EP 2 636 460 A2**
(43) Date of publication of application: **11.09.2013**
(21) Application number: 13250021.6
(22) Date of filing: 01.03.2013
(51) Int. Cl.: B08B 9/02, B23D 67/12

(54) **A hand tool for removing pipe coatings**

(30) Priority: 08.03.2012 GB 201204077; 27.02.2013 GB 201303488
(71) Applicant: Lehane, Peter, Nort Wales LL29 7DR (GB)
(72) Inventor: Lehane, Peter, Nort Wales LL29 7DR (GB)
(74) Representative: Bray, Lilian Janet

(57) **Abstract**

A hand tool (1) is provided for removing a coating from a pipe or similar cylindrical object. The tool (1) comprises a grip (2) adapted for clamping fitment around the pipe. The grip (2) has an interior surface (3) in which is located at least one abrasive means (10) whereby relative rotation of the pipe with respect to the grip (2) causes the abrasive means to strip away an annular portion of the coating from the pipe. Preferably, the abrasive means comprises one or more files (4) that are embedded in the interior surface (3) of the grip (2) and the grip (2) comprises a pair of longitudinally extending jaws (6, 7,) with the file or files (4) extending linearly parallel to a longitudinal axis (9) of the grip (2).

## Description

The present invention relates to a hand tool for removing exterior coatings from pipes or similar cylindrical objects.

Pipes, in particular pipes for use in domestic plumbing, are often provided with a coating, for example for corrosion protection, decoration or similar. Copper piping, for example, is often given a chromium coating for decorative purposes and plastics piping is often covered by another decorative plastics or paint coating. When it is necessary to connect a length of such piping to another component or to another length of pipe it is usually necessary to remove the outer coating to ensure a water-tight connection is made. Chromium coatings, for example, are too hard to produce a water-tight joint in push-fit connections because the push-fit clamp cannot bite into the coating, which is the reason why they have to be removed. Removal of the coating adjacent a joint also enables metal pipes to be more readily brazed together.

Conventionally, coatings are removed by wire brushing the end of the pipe or by rubbing the end of the pipe down with emery paper or similar. However, such methods are time consuming and may damage the underlying pipe so that it no longer presents a perfectly circular profile. This can affect the water-tightness of the subsequent joint made with the stripped end of the pipe, especially if a push-fit connector is used or an O-ring seal is fitted thereto.

It is an object of the present invention to provide a hand tool for removing a pipe coating that overcomes or that substantially mitigates the aforementioned disadvantages.

According to the present invention there is provided a hand tool for removing a coating from a pipe or similar cylindrical object comprising a grip that is adapted for clamping fitment around a pipe and that defines an interior surface in which is located at least one abrasive means whereby relative rotation of the pipe with respect to the grip causes the abrasive means to strip away an annular portion of the coating from the pipe.

Preferably, the grip comprises a pair of longitudinally extending jaws and the abrasive means extends linearly parallel to a longitudinal axis of the grip.

Preferably also, the jaws are hinged together longitudinally such that when the jaws are held closed manually, the grip is clamped around the pipe.

Preferably also, the abrasive means comprises one or more files that are embedded in the interior surface of the grip.

Other preferred but non-essential features of the invention are described in the dependent claims.

An example of the present invention will now be described by way of example with reference to the accompanying drawing in which;-
Fig. 1 is a perspective view of a hand tool in accordance with the present invention when partially opened to permit one end of a length of pipe to be located therein;
Fig. 2 is a view from one end of the hand tool shown in Fig. 1 when in a closed condition;
Fig. 3 is a view similar to Fig. 2 but from the other end of the tool;

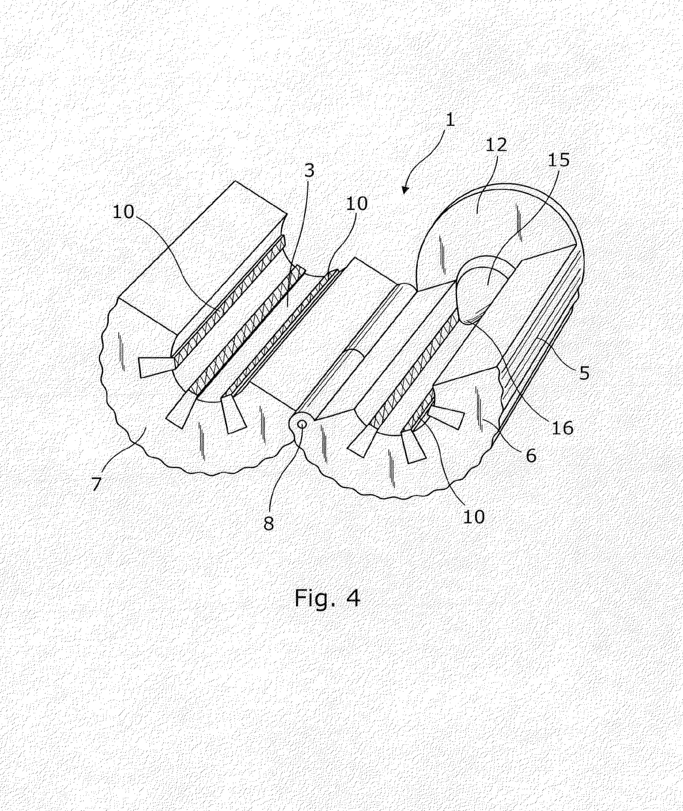

Fig. 4 is a view similar to Fig. 1 but showing a modified hand tool.

A hand tool 1, as shown in the drawing, is designed for removing a coating from a pipe or similar cylindrical object. In particular, the tool 1 is suitable for the removal of chromium coatings from metal pipes. To this end the tool 1 comprises a grip 2 that is adapted for clamping fitment around a pipe and that defines an interior surface 3 in which is located at least one abrasive means whereby manual rotation of the pipe relative to the grip 2 causes the abrasive means to strip away an annular portion of the coating from the pipe. Hence, it will be appreciated that the size of the tool 1 is made appropriate for the diameter of the type of pipes with which it is to be used.

In the present example, the abrasive means comprises at least one file 4 that is embedded in the interior surface 3 of the grip 2, which is preferably made of a resilient material such as rubber or plastics that has been provided with a non-slip exterior surface 5, for example by being knurled or similar. While the grip 2 could be made in separate pieces that can be squeezed together when located around a pipe, preferably the grip 2 comprises a pair of longitudinally extending jaws 6, 7 that are hinged together longitudinally, as at 8, so that when they are closed around a pipe by manual squeezing, the grip 2 is clamped around the pipe. To this end, the exterior of the grip 2 is preferably cylindrical in shape when the jaws 6, 7 are closed around a pipe and of a size suitable for being squeezed in one hand. However, it will be appreciated that the grip 2 could be made in larger sizes and the jaws 6, 7 could be squeezed together using pliers, a vice or other similar tools.

Many different abrasive means could be used, for example strips of abrasive paper or files 4, secured to the interior surface of the grip 2. Preferably, the means comprises one or more abrasive surfaces 10 that extend linearly parallel to a longitudinal axis 9 of the grip. In the illustrated example, three evenly spaced files 4 are located in each jaw 6, 7 and are arranged such that their abrasive surfaces 10 lie on a cylindrical surface having a longitudinal axis coincident with the longitudinal axis 9 of the grip 2. This cylindrical surface is commensurate in diameter with the particular diameter of pipe for which the tool 1 has been designed, for example pipes for use in domestic plumbing. Preferably, the files 4 are located in longitudinally extending slots 11 formed in the interior surface 3 of the grip 2 so that their abrasive surfaces 10 project from the surface 3. Advantageously, the slots 11 have a dove-tail profile that retains the files 4 within them but permit a relatively simple removal and replacement each file 4 when it has been worn down through use. Alternatively, the slots 11 need not have a dove-tail profile and the files 4 may be secured in the slots 11 by an adhesive or other securement means.

A pipe locator may be located at one end of the grip 2 in order to facilitate consistency in use of the tool 1 by providing a stop against which an end of a length of pipe located in the tool 1 abuts. By making the abrasive means 4, 10 and the jaws 6, 7 of a length similar to that of the coating it is usually desired to remove from an end of a pipe, the locator facilitates the removal of such a length of coating without the user having to measure it as only a length at one end of a pipe commensurate with the length of the tool 1 can be inserted into the tool 1. In some embodiments, the locator may also assist in the correct positioning of the pipe within the tool 1 and aligns it with the longitudinal axis 9.

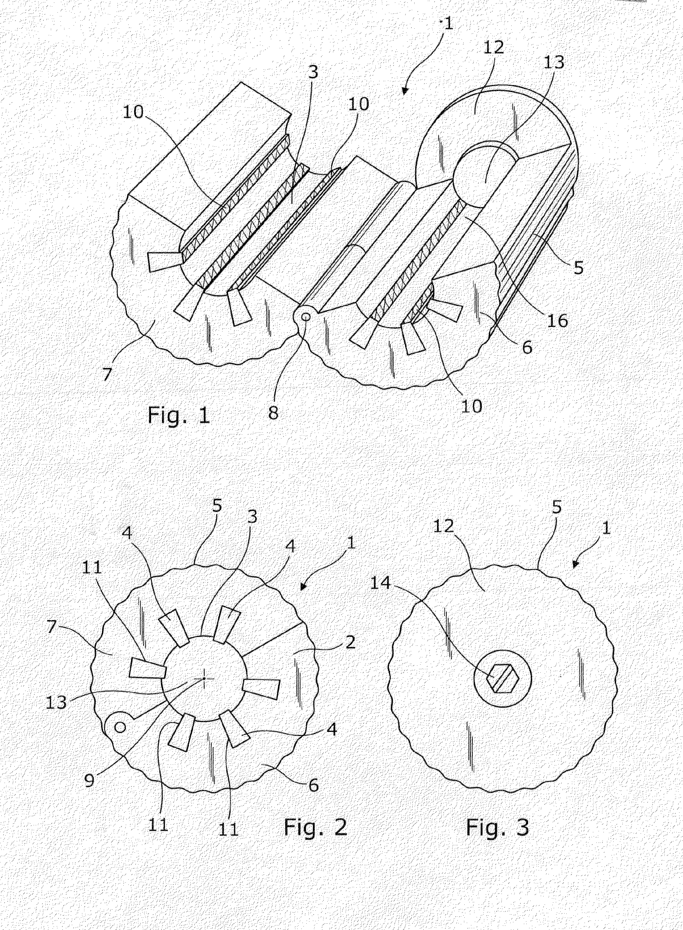

In its simplest form, the locator comprises a circular plate 12 that has a diameter commensurate with the exterior diameter of the cylindrical grip 2 and that is integrally formed with or is secured to the end of one of the jaws 6, as shown in Fig. 1. Preferably, to prevent wearing of the plate 12 by the pipe when tool 1 is used, a disc or washer 13 is located on the inner side of the plate 12 and fits between the jaws 6, 7 when they are closed. The disc or washer 13 therefore has a diameter similar to the exterior diameter of the pipe. The disc or washer 13 may be secured to the plate 12 by adhesive, be integrally formed therewith or be secured thereto by a screw 14. In the latter case the disc or washer 13 is replaceable when it becomes worn.

In a modification, the disc or washer 13 may be replaced by a projection 15 that is adapted for insertion into one end of the pipe. The projection 15 is aligned with the axis 9 and projects into the interior of the grip 2 between the jaws 6, 7 so that it can be inserted into the end of the pipe that is located within the tool 1. Preferably, the projection 15 is conical and tapers towards its tip 16 and has a diameter at its base which is commensurate with but slightly less than the interior diameter of the pipe so that the pipe is retained in position within the grip 2 when closed but does not prevent the grip 2 from being rotatable relative to the pipe. The projection 15 may be integrally formed with the plate 12 or be secured thereto by the screw 14.

In use, a pipe from which it is desired to remove an exterior coating is located within the jaws 6, 7 of the grip 2 so that the end of the pipe either abuts the disc or washer 13 or is fitted over the projection 15. The jaws 6, 7 are then closed and, while retained in this position manually, the tool 1 is rotated relative to the pipe. The files 4 then act to strip off an annular portion of the outer coating at the end of the pipe. It will be appreciated that because the abrasive surfaces 10 lie on a cylindrical surface that the stripped end of the pipe retains an exterior cylindrical profile once the outer coating has been stripped away. This ensures that the end of the pipe will still make a good water-tight connection with a push-fit connector or O-ring seal.

It will also be appreciated that the tool 1 is not limited for use in the removal of a coating from the end of a pipe. If the plate 12 is omitted from the tool 1, it can be used to remove an annular portion of a coating from any part of a length of pipe. The tool 1 could also be used in a similar way to remove a coating or annular portion of the outer surface of any cylindrical object of appropriate size.

## Claims

1. A hand tool (1) for removing a coating from a pipe or similar cylindrical object comprising a grip (2) that is adapted for clamping fitment around a pipe and that defines an interior surface (3) in which is located at least one abrasive means (10) whereby relative rotation of the pipe with respect to the grip (2) causes the abrasive means (10) to strip away an annular portion of the coating from the pipe.

2. A hand tool as claimed in Claim 1, wherein the grip (2) comprises a pair of longitudinally extending jaws (6, 7) and the abrasive means (10) extend linearly parallel to a longitudinal axis (9) of the grip (2).

3. A hand tool as claimed in Claim 2, wherein the jaws (6, 7) are hinged together longitudinally such that when the jaws (6, 7) are held closed manually, the grip (2) is clamped around the pipe.

4. A hand tool as claimed in any of Claims 1 to 3, wherein the abrasive means (10) comprises one or more files (4) that are embedded in the interior surface (3) of the grip (2).

5. A hand tool as claimed in Claim 4, wherein the file or files (4) are located in one or more longitudinally extending slots (11) formed in the interior surface (3) of the grip (2) so that its or their abrasive surface (10) projects from said interior surface (3).

6. A hand tool as claimed in Claim 5, wherein the slots (11) have a dove-tail profile that retains the files (4) within the slots (11).

7. A hand tool as claimed in any of Claims 4 to 6, wherein there is a plurality of spaced files (4) arranged such that their abrasive surfaces (10) lie on a cylindrical surface having a longitudinal axis coincident with the longitudinal axis (9) of the grip (2).

8. A hand tool as claimed in any of Claims 4 to 7 when dependent on Claim 2 or Claim 3, wherein there are three evenly spaced files (4) are located in each jaw (6, 7).

9. A hand tool as claimed in any of Claims 1 to 8, comprising a pipe locator (12) at one end of the grip (2) that forms a stop against which, in use, an end of a length of pipe located in the tool (1) may be abutted.

10. A hand tool as claimed in Claim 9, wherein the locator (12) comprises a plate (12) that is integrally formed with or that is secured to an end of one of the jaws (6).

11. A hand tool as claimed in Claim 10, wherein a disc or washer (13) is located on an inner side of the plate (12) and fits between the jaws (6, 7) when they are closed.

12. A hand tool as claimed in Claim 9 or Claim 10, wherein the locator (12) comprises a projection (13) adapted for insertion into one end of the pipe.

13. A hand tool as claimed in any of Claims 1 to 12, wherein the exterior surface of the grip (2) is knurled or otherwise provided with a non-slip surface (5).
